# EUROPEAN PATENT APPLICATION

(11) **EP 1 190 823 A2**
(43) Date of publication of application: **27.03.2002**
(21) Application number: 01203081.3
(22) Date of filing: 13.08.2001
(51) Int. Cl.: B27G 11/00

(54) **Method and apparatus for joining wood blocks together**

(30) Priority: 22.08.2000 FI 20001854
(71) Applicant: Järme Oy, 15700 Lahti (FI)
(72) Inventor: Kallio, Pentti, 15270 Kukkila (FI)
(74) Representative: Järveläinen, Pertti Tauno Juhani

(57) **Abstract**

Method for joining wood blocks (1) together, wherein both joint surfaces (2,3) are heated, wherein an adhesive is applied to one (2) of the joint surfaces and wherein the joint surfaces are then pressed together, and wherein the joint surfaces are heated to different temperatures so that the surface (3) opposite to the adhesive surface (2) is heated to a substantially higher temperature than the adhesive surface.

## Description

The present invention relates to a method for joining wood blocks together. The invention also relates to an apparatus for joining wood blocks together.

In prior-art methods for the manufacture of e.g. laminated beams, an adhesive is applied to one of the surfaces to be placed against each other, whereupon the blocks to be glued together are placed in a press and kept under pressure until the adhesive has dried sufficiently. Due to the long drying time, large presses capable of accommodating a large number of objects to be pressed at a time are needed.

Fl-patent specification 97959 presents a method for joining together wood blocks, such as laminated beams and laminated building timber, wherein an adhesive is applied to one surface of the wood blocks, the wood blocks being conveyed in a horizontal plane are heated from the opposite side using an IR radiator placed above them, whereupon the wood blocks are piled up so that the surface with adhesive applied to it goes against the warmed surface an adjacent wood block and the wood blocks are pressed together by means of a press. On the block forming the lower surface, only adhesive is applied, and the block forming the upper surface is only heated. The wood blocks between these are given both treatments. By effective heating applied directly to the joint, it is possible to shorten the pressing times. According to the aforesaid specification, the wood blocks are typically heated to a temperature in the range of 40-90°C.

Fl-patent specification 103490 discloses a method for gluing wood blocks together by irradiation heating e.g. by means of an IR radiator, wherein the irradiation heating is performed in heating cycles with a pause between cycles. According to this specification, both surfaces to be glued together can be heated.

The object of the invention is to accelerate the process of joining wood blocks together and drying of the adhesive in the glued joint. The invention is based on the idea of increasing the temperature of the surfaces to be glued together while the blocks are being joined together to a considerably higher level than in current systems, thereby shortening the gluing time as compared with prior-art systems. In the method of the invention, wherein both joint surfaces are heated, wherein an adhesive is applied to one of the joint surfaces and wherein the joint surfaces are then pressed together, this is implemented by heating the joint surfaces to different temperatures so that the surface opposite to the adhesive surface is heated to a substantially higher temperature than the adhesive surface.

A preferred embodiment of the invention is characterized in that the adhesive surface is heated to a temperature in the range of 40-90°C and the opposite surface to a temperature higher than 100°C.

A preferred embodiment of the invention, wherein the adhesive surfaces are heated by means of irradiation heaters, is characterized in that the joint surfaces are oscillated during the heating phase to achieve uniform heating by moving the adhesive surfaces with respect to the irradiation heaters in different directions, or vice versa.

A preferred embodiment of the invention is characterized in that the heating is implemented using IR radiation.

The apparatus of the invention, comprising a heating system including a control unit and heating elements for heating both joint surfaces, a glue application apparatus for applying glue to one of the joint surfaces, a pressing apparatus for subsequently pressing the joint surfaces together and a conveying apparatus for conveying the wood blocks, is characterized in that the heating elements are fitted on either side of the conveying apparatus and that the control unit causes the heating elements to heat the joint surfaces to different temperatures so that the surface opposite to the adhesive surface is heated to a substantially higher temperature than the adhesive surface.

A preferred embodiment of the apparatus of the invention, comprising rail-like guide elements for guiding the wood blocks during heating, is characterized in that, in the region of the heating elements, the guide elements are fitted in a substantially vertical position and the heating elements are fitted on either side of them, the wood blocks being conveyed in a substantially vertical direction during the heating phase.

A preferred embodiment of the apparatus of the invention is characterized in that it comprises moving means by means of which the adhesive surfaces are oscillated during heating to achieve uniform heating by moving the adhesive surfaces with respect to the irradiation elements or moving the irradiation elements with respect to the adhesive surfaces in different directions.

A preferred embodiment of the apparatus of the invention is characterized in that the heating elements are IR radiation elements.

The solution of the invention provides many advantages. The joining time is significantly shortened because, when the wood blocks are being joined together, the temperature at the joint is very high, even above 100°C. Therefore, a considerably higher capacity e.g. in the manufacture of laminated timber is achieved than with prior-art solutions. Moreover, the arrangement of the invention makes it possible to join together even fairly wet wood blocks.

In the following, the invention will be described in detail by the aid of an example with reference to the attached drawing, wherein
Fig. 1 presents a front view of a heating apparatus according to the invention,
Fig. 2 presents a top view of the heating apparatus of the invention.

The apparatus of the invention is used for manufacturing e.g. laminated timber from laminae. Planed laminae 1 are first conveyed by means of a conveying apparatus into an IR radiation heating apparatus, where both joint surfaces 2, 3 of the laminae are heated. After that, the laminae 1 are passed into a glue application device, where an adhesive is applied to one 2 of the joint surfaces. Next, the laminae are piled up and pressed together in a press to produce a laminated timber.

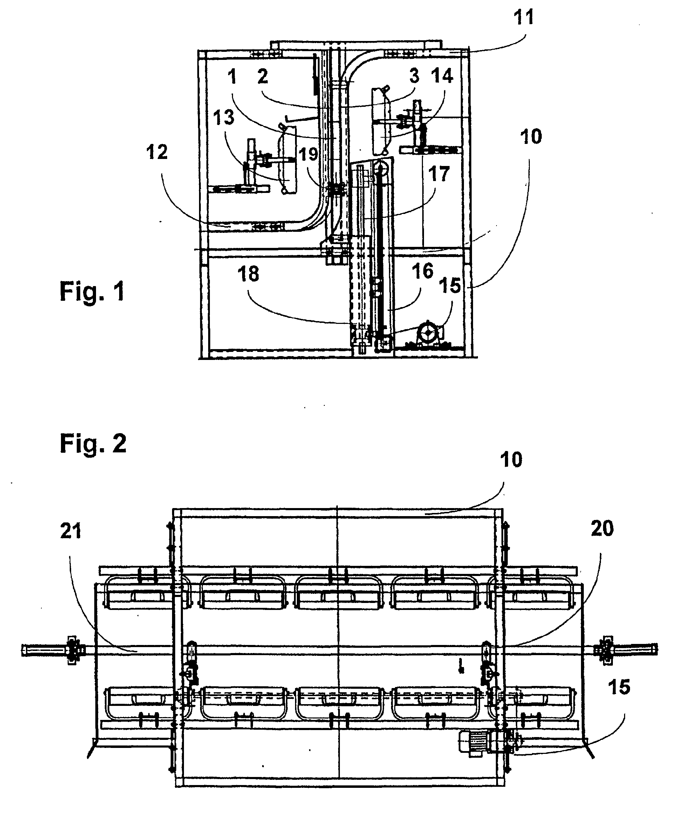

The heating apparatus presented in Fig. 1 and 2 comprises a frame consisting of vertical and horizontal metal bars 10. Attached to the frame is a guide bar structure with guide bars 11, 12 guiding the laminae 1 through the heating apparatus (in Fig. 1, from right to left). The guide bars are so bent that the horizontal portion on the first rails 11 is attached to the upper part of the frame bar structure 10 while the vertical portion thus extends in an upright position in the middle region of the heating apparatus approximately to the center of the heating apparatus, after which the bars 11 again bend slightly to the left. The second bars 12 again extend in an upright position in the middle region of the heating apparatus and then bend to the left, extending in a horizontal position in the middle region of the heating apparatus, as seen in the vertical dimension, to its edge. The vertical portions of the bars 11, 12 have been fitted at a distance from each other corresponding to the thickness of the laminae 1.

For heating the laminae 1, the heating apparatus is provided with IR heating elements 13, 14 mounted on either side of the vertical portions of the bars 11, 12 to heat both sides 2, 3 of the laminae 1. The electricity to the heating elements is supplied from a control unit (not shown). The number of heating elements to be used naturally depends on the length of the laminae; there may be e.g. 5 heating elements mounted side by side in the same horizontal plane as shown in Fig. 2.

To guide the laminae 1 in the vertical direction, the apparatus has a drive motor 15 provided with a control unit and coupled to a vertical chain drive 16, which moves a runner part 18 mounted on a vertical guide rail system 17 and provided with a bracket 19 supporting the laminae 1.

The heating apparatus presented in Fig. 1 and 2 works as follows. Planed laminae 1 are brought by a transverse conveyor onto guide bars 11 and left resting on the bracket 19, which is now above the IR heating elements 13, 14. After this, the drive mechanism moves the bracket 19 and the laminae 1 supported by it to an intermediate position, where the laminae 1 are at the level of the IR heating elements 13, 14, in which position the laminae are heated. After this, the bracket 19 moves to a low position and the laminae 1 are turned into a horizontal position by means of the guide bars 11, 12 and conveyed further by a second transverse conveyor.

As explained above, the laminae 1 are heated from both sides 2, 3 by means of IR heating elements 13, 14. The heating is so implemented that the adhesive surface 2, which is the surface to which the adhesive is applied, is heated by the heating elements 13 on the left-hand side to a lower temperature, typically in the range of 40 - 90°C, at which the adhesive, e.g. phenol resorcinol formaldehyde resin, will not harden, whereas the opposite surface 3, to which no adhesive is applied, is heated by the heating elements 14 on the right-hand side to a considerably higher temperature, typically a temperature above 100°C, e.g. 140°C. Thus, when the surfaces 2, 3 are pressed together, the temperature at the glued joint is very high and the adhesive therefore hardens very quickly.

To achieve a uniform distribution of heat on the surfaces 2, 3, the laminae 1 can be oscillated in the region of the heating elements by moving them back and forth vertically and transversely through a distance of e.g. 100 mm in both directions. To implement this, the drive mechanism may cause the bracket to be moved vertically back and forth in the region of the heating elements 13, 14 by means of the chain drive. In addition, the apparatus comprises motion links 20 at the ends of the laminae 1, which are moved by means of a transverse control arm part 21 controlled by the drive mechanism so as to impart a lateral motion to the laminae (Fig. 2).

It is obvious to the person skilled in the art that the invention is not limited to the examples described above, but that it may be varied within the scope of the claims presented below.

## Claims

1. Method for joining wood blocks (1) together, wherein both joint surfaces (2,3) are heated, wherein an adhesive is applied to one (2) of the joint surfaces and wherein the joint surfaces are then pressed together, **characterized in that** the joint surfaces are heated to different temperatures so that the surface (3) opposite to the adhesive surface (2) is heated to a substantially higher temperature than the adhesive surface.

2. Method as defined in claim 1, **characterized in that** the adhesive surface is heated to a temperature in the range of 40-90°C while the opposite surface is heated to a temperature above 100°C.

3. Method as defined in claim 1 or 2, **characterized in that** the joint surfaces are oscillated during the heating phase to achieve uniform heating by moving the adhesive surfaces in different directions with respect to irradiation heaters, or vice versa.

4. Method as defined in any one claims 1 - 3, **characterized in that** the heating is implemented using IR radiation.

5. Apparatus for joining wood blocks (1) together, comprising a heating apparatus including a control unit and heating elements (13) for heating both joint surfaces, a glue spreading apparatus for applying an adhesive to one of the joint surfaces, a pressing apparatus for subsequently pressing the joint surfaces together and a conveying apparatus for conveying the wood blocks, **characterized in that** the heating elements (13) are fitted on either side of the conveying apparatus and that the control unit causes the heating elements to heat the joint surfaces to different temperatures so that the surface (3) opposite to the adhesive surface is heated to a substantially higher temperature than the adhesive surface (2).

6. Apparatus as defined in claim 5, provided with rail-like guide elements for guiding the wood blocks (1) during the heating phase, **characterized in that**, in the region of the heating elements, the guide elements (11,12) are fitted in a substantially vertical position and the heating elements are fitted on either side of them, the wood blocks being conveyed in a substantially vertical direction during the heating phase.

7. Apparatus as defined in claim 5, **characterized in that** it comprises moving means (20,21) whereby the adhesive surfaces are oscillated during the heating phase to achieve uniform heating by moving the adhesive surfaces with respect to the irradiation elements or moving the irradiation elements with respect to the adhesive surfaces in different directions.

8. Apparatus as defined in claim 5, **characterized in that** the heating elements are IR radiation elements.
